# EUROPEAN PATENT APPLICATION

(11) **EP 1 225 512 A1**
(43) Date of publication of application: **24.07.2002**
(21) Application number: 01400161.4
(22) Date of filing: 19.01.2001
(51) Int. Cl.: G06F 12/14, G06F 1/00

(54) **Method for protecting computer programs and data from hostile code**

(71) Applicant: Dotan, Eyal, 77600 Bussy-Saint-George (FR)
(72) Inventor: Dotan, Eyal, 77600 Bussy-Saint-George (FR)
(74) Representative: Cabinet Hirsch

(57) **Abstract**

A method that protects computer data from untrusted programs. Each computer's object and process is assigned with trust attributes, which define the way it can interact with other objects within the system. The trust attributes are defined hierarchically, so that processes cannot access objects with higher trust levels than themselves. When accessing objects with lower trust levels, processes can see their trust levels lowered to that of the object accessed. The interaction between processes and objects of different levels is entirely programmable.

## Description

### Background

### 1. Field of the Invention

The present invention relates to an improved method for protecting computer data and programs, and more generally to improved computer system and network security. The invention is useful for preventing data damage and theft, which can be done by malicious code attacks.

### 2. Background Discussion

We call "malicious" or "hostile" any code designed or modified to corrupt or steal data or programs from the computer system or network on which it runs. Protecting from hostile code is a challenging problem, since there is no way to programmatically distinguish positive and negative program actions, other than knowing whether they are ultimately good for the user or not. For example, a program may delete a file because the user has explicitly asked it to, but a malicious program could also delete a file against the user's will.

Although it is possible to authenticate authorized users with password, trusted users themselves may endanger the system and network's security by unknowingly running programs that contain malicious instructions such as "viruses", "Trojan horses", "malicious macros", "malicious scripts", "worms", "spying programs" and "backdoors". A computer virus is a program that replicates by attaching itself to other programs. A Trojan horse is a program that in a general way does not do what the user expects it to do, but instead performs malicious actions such as data destruction and system corruption. Macros and scripts are programs written in high-level languages, which can be interpreted and executed by applications such as word processors, in order to automate frequent tasks. Because many macro and script languages require very little or no user interaction, malicious macros and scripts are often used to introduce viruses or Trojan horses into the system without user's approval. A worm is a program that, like a virus, spreads itself. But unlike viruses, worms do not infect other host programs and instead send themselves to other users via networking means such as electronic mail. Spying programs are a subtype of Trojan horses, secretly installed on a victim computer in order to send out confidential data and passwords from that computer to the person who put them in. A backdoor is just like a spying program, except that it is added to a useful software. In other words, if a user installs a word-processing program that has a backdoor, the program will indeed do word-processing, but it will also send out confidential data.

All of the above programs can compromise computer systems and a company's confidentiality by corrupting data, propagating from one file to another, or sending confidential data to unauthorized persons, inspite of the user's will. This is due to the fact that programs run with the same access privileges as the users who executed them. Thus, any object that is accessible to the user, is also accessible to the programs he runs.

Along the years, different techniques were created to protect computer systems against malicious programs:

Signature scanners detect viruses by using a pre-defined list of "known viruses". They scan each file to for each virus signatures listed in their known virus database. Each time a new virus is found anywhere in the world, it is added to that database. However, today more and more new viruses are created every day, and the known-viruses list needs to be constantly updated in order to be effective. Regularly updating an anti-virus is a heavy task for both the single-user and the network administrator and it leaves an important security gap between updates.

Another detection method, commonly called Heuristic Scanning consists of scanning programs for suspicious instructions that are typical to malicious programs and specifically viruses, without needing to have an exact signature of each virus in order to detect it in files. However, malicious program writers can avoid or hide those typical instructions by writing their code differently and/or encrypting it and thus malicious code and viruses rapidly avoid detection by Heuristic Scanners.

U.S. Pat. No. 5,408,642 and U.S. Pat. No. 5,349,655, to Mann and U.S. Pat. No. 5,613,002, to Kephart et al., all disclose methods for recovering a computer program infected with a virus. The disclosed methods include generating fingerprint of data prior to infection by a virus and storing the fingerprint. Second fingerprint of data is then generated and compared to the prior strings of data, to determine if the data has been corrupted by a virus and for restoring the data to its initial state. These techniques do not prevent viruses from infecting, nor do they protect against other types of malicious programs.

U.S. Pat. No. 6,073,239, to myself, discloses a method where file I/O activity is filtered. Whenever a program attempts to infect or inject code into another program file, it will be denied. The method, however, is only designed to work against executable-files viruses. It does not address other types of viruses, such as macro-viruses, nor other types of malicious programs: worms, Trojan horses, backdoors or spying software, because these malicious programs do not inject code nor modify other programs, but directly trigger malicious actions such as data corruption.

U.S. Pat. No. 5,421,006, to Jablon et al., discloses a method for assessing integrity of computer system software at time of system initialization. Startup processes are verified before being allowed to execute. The method, however, does not prevent the protected processes from being corrupted in the first place, nor does it deal with data and programs other than those related to the system startup.

Other security methods consist on certifying programs that are authorized to run and blocking out all the other, unauthorized programs. Unfortunately, these techniques are not always adapted to open systems where users receive and exchange many files.

Yet another security method consists on denying access to unauthorized users or unauthorized programs to certain files. These techniques, however, do not address the security risks involved in authorized users accessing or executing files that have malicious instructions. Users or programs that access or run malicious programs unknowingly, compromise the integrity of every file they're authorized to access. Additionally, those unauthorized programs need to be predefined in a static list, which does not provide security in an environment where files and programs are added and exchanged every day.

"Sandboxing" techniques allow testing suspicious programs by safely running them in a secure "sandbox" environment without letting the tested program harm the system or its files. Malicious programs, however, may not perform the offensive or expected actions immediately during the test period, either because they detected that they're being tested, or because they're designed to perform their offensive actions randomly or at certain dates, for example. Hence, although a program seems to behave correctly during the test period, it can harm the system once it has passed the test and has been allowed to run for real. Also, positive programs may not behave correctly or not function at all within a sandbox, as they may need to access files and resources within the system for normal reasons.

U.S. Pat. No. 5,398,196, to Chambers, discloses a method for emulating a program's execution in a virtual process, while searching for viral behavior. The disadvantages of this method are the same as above.

### Description

### Code definition

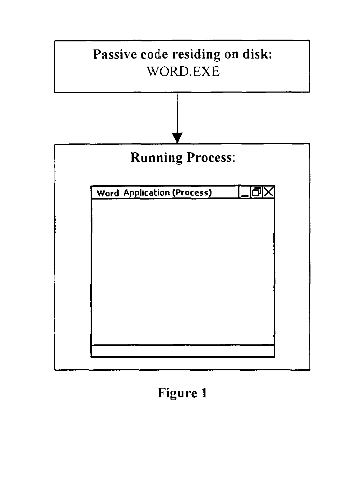

In a computer, we call "code" any set of instructions that can be interpreted or executed by the computer. When code is passively stored on a storage media without being executed, we call it "passive code". When code is actively running in memory, it is a "process". The mechanism of loading a program from the storage media where it resides as passive code, into memory (e.g. RAM) where it runs as an active process, is called "execution". Figure 1 illustrates an example of code execution mechanism: here, a file called "WORD.EXE" represents passive code. When the computer instructs to execute it, the Operating System (OS) copies an image of this file into memory (RAM) and runs it from there. At this stage, "WORD" is a process, since it is now running. Note that although the file "WORD.EXE" and the process "WORD" that is in memory may have similar contents (because one is initially copied from the other), they are two different entities: each can be modified without affecting the other. Additionally, the computer user can execute "WORD.EXE" several times and have several different "WORD" processes running at the same time, but separately. Furthermore, processes can execute passive codes and hence create other processes. If a process A creates a process B, process A is called the "parent process" and process B is called a "child process".

We call "object" any file, passive code, document, script, macro, process, registry key or other system object that needs to be protected by the present invention, or that contains Code that can be interpreted by the OS or any Process.

### Area of work: OS-level

The invention is designed to work at the OS-level, filtering I/O operations. This is usually implemented in a Driver, VxD or TSR, depending on the OS type.

### Computer supervisor

We call "supervisor" the person who's in charge of the computer's security. In networked environment, this is usually the network administrator. In single-user environments, this can be the machine user.

### Trust value

In the present invention, each object in the system has a corresponding "trust value". The trust value is an arbitrary degree of trust and/or protection the computer supervisor puts in that object. The higher an object's trust value is, the less accessible and more protected it will be, and vice versa. A trust value can be a for instance a number from 0 to 10, or it can simply be 0 or 1 meaning "Untrusted" or "Trusted". Typically, the objects of a new machine can have a high trust value. A computer's trust regresses with time, as new software and files are executed and opened on it. Different components, however, have different degrees of trust to the eye of the supervisor. For example, software that has been purchased from a computer vendor is typically more trusted than software downloaded from an unknown Internet Web or FTP sites. Thus, the computer supervisor will typically set all objects to a high trust value upon installation of a new machine. Any object installed or introduced later into the computer, will have a by default a low trust value, unless the supervisor explicitly specifies otherwise (e.g. when installing a new commercial software).

### Object Trust Table

Thus, each system's object is initially provided with a supervisor-defined trust value. All of the objects' trust values are recorded in a "Object Trust Table", stored on a storage media such as a hard disk or a database server. Any object that is added to the system will obviously not be listed in the Object Trust Table as it was set initially, and thus all objects that are not stored in the Object Trust Table are automatically considered with a low trust value by default. For example: when the machine is in its original clean state, the supervisor can mark trusted objects with a high trust value; any objects received from the outside after that moment will automatically be assigned with a low trust value, unless the supervisor specifies otherwise.

### Process Trust Table

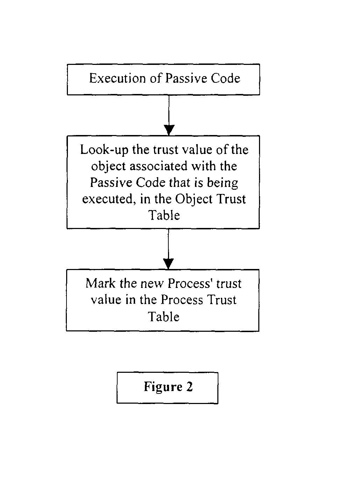

Processes, just like objects, are assigned with trust values. The reason for this is that Process trust also regresses with time. Indeed, trusted processes that load or interpret code can be manipulated into performing malicious actions themselves. For example, a Process that is initially in a trusted state can become hostile in its turn if it opens a file with macros that instruct it to spy or destroy data. Processes trust values will be stored in a second table called "Process Trust Table". This table is stored in a storage media such as RAM (Random Access Memory), and can be emptied every time the OS loads-up or restarts, since at that point there are no Processes running. When a Process is created during the phase of execution, it obtains the same trust value as the Passive Code from which it was loaded. For example, if the Passive Code "WORD.EXE" was marked with a trust value of 10, then whenever WORD.EXE is executed, the resulting new Process "WORD" will be initialized with a trust value of 10, too. Figure 2 shows how a Process obtains a trust value that depends on the object from which it was loaded.

### Creation/Modification of an object

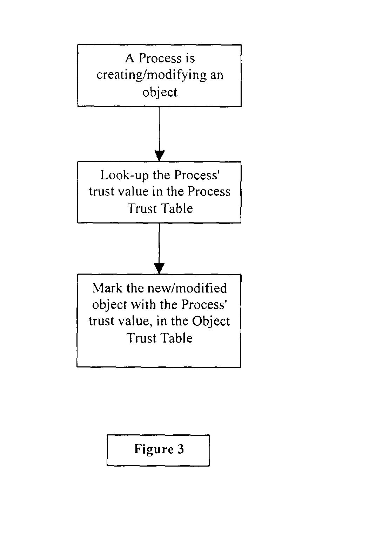

When a Process creates a new object or modifies the contents of an existing object, this object obtains the same trust attributes as that Process. Figure 3 shows how objects' trust attributes are affected by the Process that created and/or modified it.

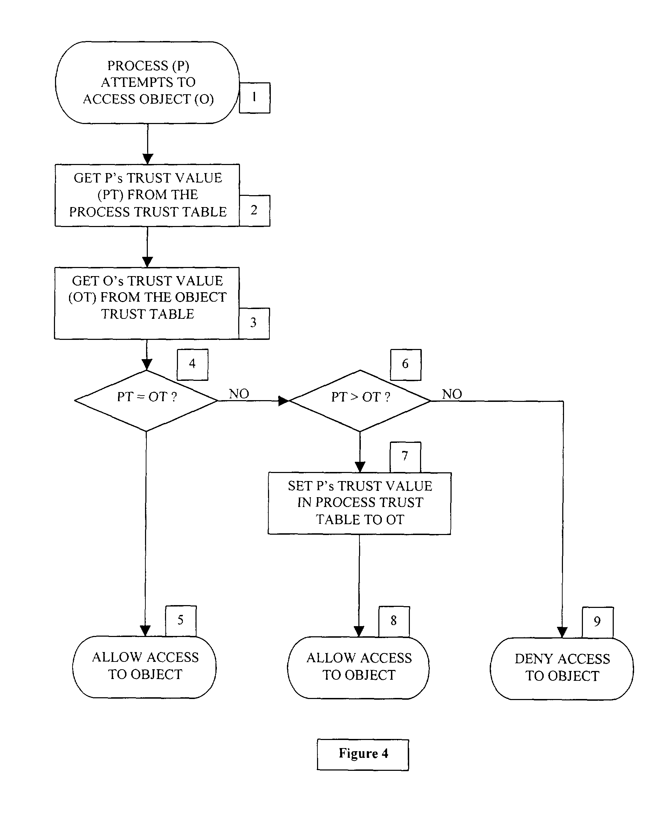

### Interaction between Processes and objects & Figure 4

Processes can access objects having the same trust value as themselves. In other words, a Process whose trust value is 5 can access an object whose trust value is 5. However, Processes cannot access objects having trust values higher than themselves. For example, a Process whose trust value is 5 cannot access an object whose trust value is 10.

When a Trusted Process accesses an object with a lower trust value, the trust value of this Process itself is immediately changed in the Process Trust Table and becomes as low as the accessed object's, and this remains until the Process is terminated. That way, the next time this Process attempts to access an object, it will be less privileged than before it accessed the untrusted object. For example, a Process with a trust value of 10 is allowed to access objects whose trust value is 10. But if it opens an object whose trust value is 9, the Process' trust value will be lowered to 9 and from that point on it will not be allowed to access objects with trust values higher than 9, and this until the process is terminated or restarted.

Figure 4 illustrates the way interaction is done between Processes and objects. In step #1, a Process (P) attempts to access an object (R). In step #2, we look-up through the Process Trust Table, looking for the entry matching Process P. We store the result in PT. In step #3, we look-up through the Object Trust Table, looking for the entry matching object R. We store the result in RT. In step #4, PT is compared with RT. If both trust values are equal, access is allowed in step #5. Back to step #4, if PT and RT were not equal, we test if the Process' trust value is higher than the object's. If this is the case, in step #7 P's entry in the Process Trust Table is set to RT and we proceed to step #8 where access to the object is allowed. Note that the next time Process P attempts to access an object, it will go through the same decision-making except that its trust value will be different, as it was changed in step #7. Going back to step #6, if the Process' trust value is lower than the object's, then we proceed to step #9 where access to the object is denied.

### Concrete example of the invention

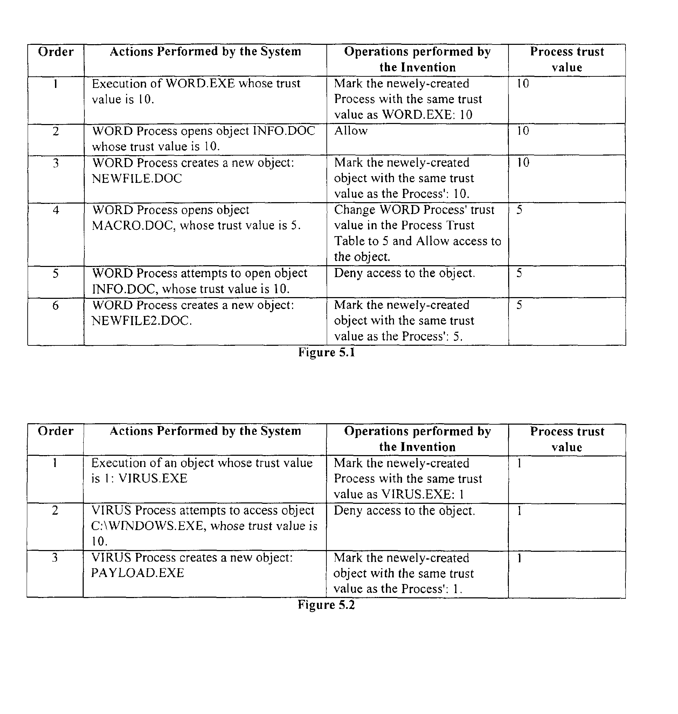

Figures 5.1 and 5.2 illustrate concrete examples of the invention in different scenarios.

Thus, with the method presented so far we have secured the system. Now we'll see a variant of this method, which is more flexible and faster.

### Improvement: trust groups

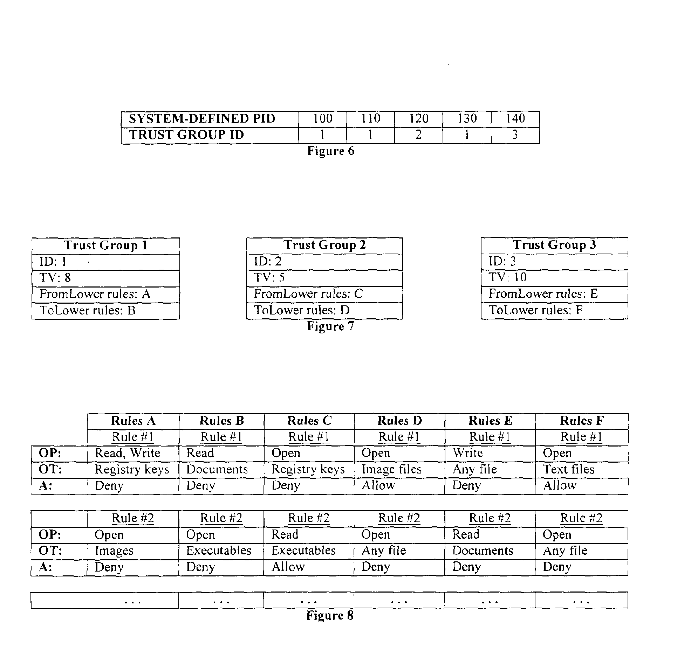

In addition to providing each object with a trust value, we'll establish "Trust Group" structures, where additional information and behavior will be defined. Instead of identifying objects and Processes just by their trust values, we'll now link every object and process to a "Trust Group", using a Trust Group identifier. Figure 6 shows an example of Process Trust Table where each process, identified by an OS-provided process ID (PID), is linked to a Trust Group with a Trust Group identifier. The Trust Group definitions are recorded in a central table called "Trust Groups Table", recorded on a central storage media (e.g. file server, hard-drive or non-volatile memory). Each Trust Group is a data structure composed by the following:

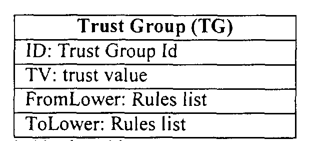

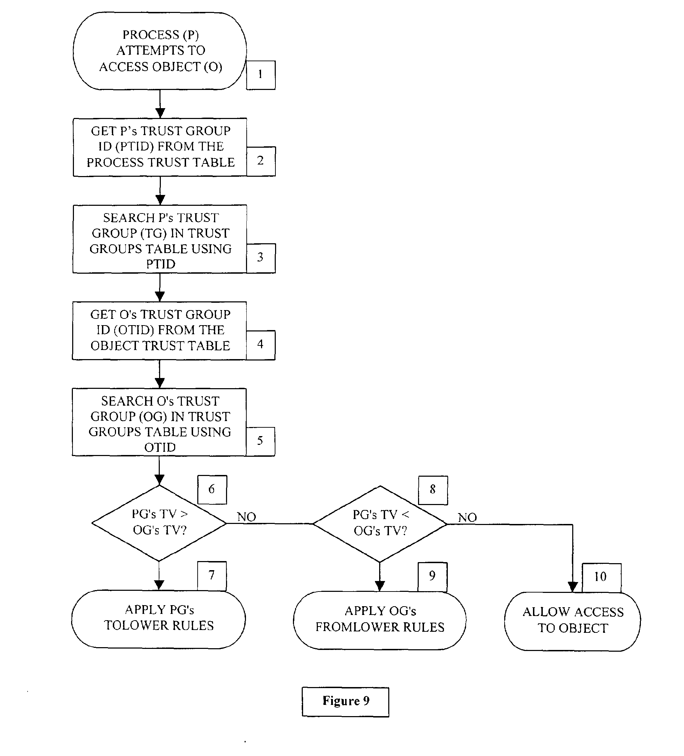

ID is an index value, recorded in the Object Trust Table and the Process Trust Table, which identifies the Trust Group to which objects and Processes belong. TV is the group's trust value. FromLower is a list of rules to be applied when requests are made by processes whose Trust Group's trust value is lower than TV, targeted at objects belonging to TG. ToLower is a list of rules to be applied when a process belonging to group TG is making requests on objects whose trust values are lower than TV. Figure 7 shows an example of Trust Group definitions, with three different trust groups.

A "rules list" links several rule nodes together. Each rule node is formed of the following:

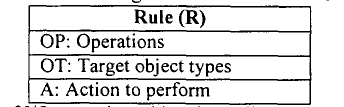

OP indicates what kind of I/O operations this rule applies for. For example, OP can be: Open, Read, Write. OT is the type of objects for which this rule applies. It can be, for example: executable files, document files and registry keys. Objects can also be applied to functions that need to be limited to Processes with certain trust groups; for example, indicating "networking API" as an object type allows to forbid use of networking operations to untrusted Processes. A is the action to perform when OP and OT match a request. It can be for example: "Deny", "Allow", "Set requesting process' trust to target object's" and/or "Set target object's trust to process"'. These last two actions allow to dynamically change a process or an object's trust groups, according to its interaction with other processes and objects. Figure 8 shows an example of several rules lists.

Let us now see how this new implementation works. Figure 9 illustrates a flowchart in which a process (P) attempts to access an object (O). In step #2, we look-up through the Process Trust Table, looking for the entry matching Process P. On most operating systems, the process can be identified by its process ID (PID). The Trust Group ID associated with the process is stored in PTID. In step #3, we look-up through the Trust Groups Table, looking for the trust group whose ID matches PTID. In step #4 and step #5, we repeat the same operations for the object that the process is attempting to access. In step #4 we look for the object's Trust Group ID within the Object Trust Table and store it in OTID. In step #5 we look-up the Trust Groups Table for the Trust Group whose ID matches OTID. In step #6, we compare the trust value fields of the process' Trust Group to that of the object's Trust Group. If the process' trust group has a higher trust value, we proceed to step #7, where we apply the rules from the process' trust group ToLower field. Back to step #6, if the process' trust group did not have a higher trust value than the object's, we proceed to step #8, where we test if the process' trust group has a lower trust value. If that is the case, we proceed to step #9, where we apply the rules from the target object's FromLower field. Back to step #8, if the process' trust group and the object's trust group had equal trust value fields, then access is allowed to the object in step #10.

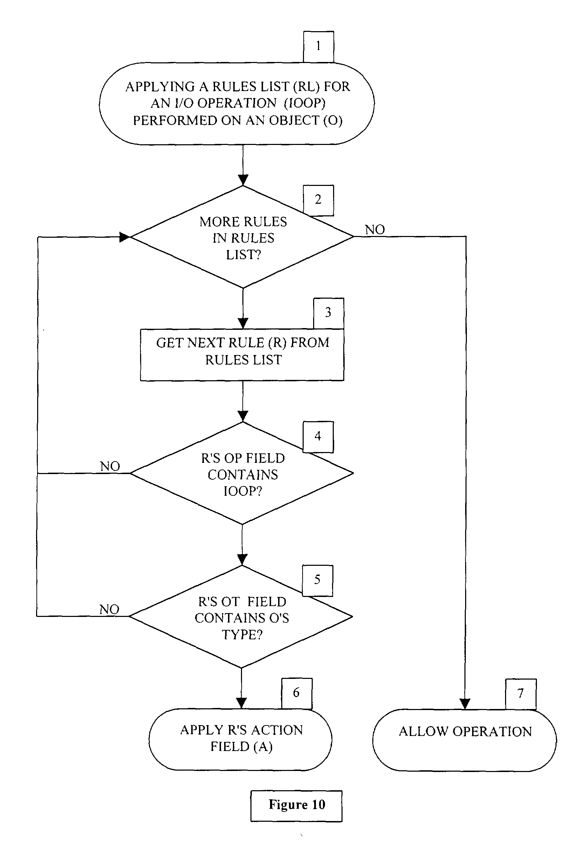

Figure 10 shows how a rule is applied from a trust group's rules list field. In step #1, we refer to the rules list that needs to be applied. In IOOP, we have the operation that is requested on the target object (O). Steps #2 through #5 are executed in a loop, for each rule node in the rules list. In step #4, we test if the current rule's OP field contains the requested operation IOOP. Such test can be done using a bit combination for example, where each possible operation is represented by a bit, and the whole number represents the total set of operations. If the test isn't positive, we proceed to the next rule in step #2. Similarly, in step #5 we test if the current rule's OT field contains the type of object O. The object's type can be for example: executable file, document file, registry key etc. If this is not the case, we proceed to the next rule in step #2. If both conditions were true, the process is finished in step #6, where the action to be applied is obtained from the rule node's Action field. If no rule was found that matches the required conditions, the process is finished in step #7, where the operation is by default allowed.

To enhance flexibility further, rule nodes can also have a "rules priority" field. This allows resolving tests between two different trust groups having the same trust values: the group whose rules priority is higher, will be obeyed to. This can also help with special cases where the rules of the trust group with the lowest trust value needs to be applied instead ofthat ofthe trust group with the highest trust value, as was shown in Figure 10.

Hence, it is now possible to establish a secure environment in which several Trust Groups protect different objects with different security attributes. The Trust Groups can be pre-defined and/or configurable.

## Claims

1. A method for protecting computer objects from hostile software, where:
Objects and processes are assigned with different trust groups.
Each trust group has its own set of trust rules.
Each set of trust rules define the way a process of a certain trust group can interact with an object of a certain trust group;
when a process requests to access an object or perform I/O on it, the trust rules of said process' and/or said object are obeyed. Depending on the resulting decision, the operation is either allowed or denied and the process' and/or object's trust group or rules are either changed or remain unchanged.

2. The method described in claim 1, where trust groups are not linked to any specific trust rules, but are simply composed of trust values, and where global trust rules define the interaction between processes and objects according to pre-defined criteria, such as trust hierarchy (process' trust higher, equal, or lower than object's).

3. The method described in claim 1, where trust rules are dependent on I/O operations and/or target types. Object types can be divided into any category useful for the matter of security, such as file formats (e.g. executable files, HTML files), file types (e.g. image files, files with script), registry keys, processes, networking API, Internet API etc.

4. The method described in claim 1, where processes are assigned with the trust group of the object from which they were loaded.

5. The method described in claim 1, where objects created or modified by a process are automatically assigned with said process' trust group.

6. The method described in claim 1, wherein trust tables and trust rules are stored in a non-volatile memory.

7. The method described in claim 1, wherein trust tables and trust rules are stored centrally on a distant server.
